# EUROPEAN PATENT APPLICATION

(11) **EP 4 800 879 A1**
(43) Date of publication of application: **02.09.2026**
(21) Application number: 26152349.2
(22) Date of filing: 16.01.2026
(51) Int. Cl.: H02J 7/00

(54) **WEARABLE ELECTRONIC DEVICE, CHARGING DEVICE AND OPERATION METHOD THEREOF**

(30) Priority: 26.02.2025 US 202563763266 P; 04.06.2025 US 202519227488
(71) Applicant: HTC Corporation, Taoyuan City 330, (TW)
(72) Inventor: WU, Chuan-Li, 330 Taoyuan City (TW); CHIN, LungTing, 330 Taoyuan City (TW)
(74) Representative: Wagner & Geyer

(57) **Abstract**

A wearable electronic device, a charging device, and an operation method thereof are provided. The charging device includes a power generation circuit and a pseudo load circuit. The power generation circuit receives supply power from an external device, generates system power and charging power according to the supply power. The pseudo load circuit is coupled to an endpoint where the power generation circuit generates the system power or the charging power, and provides a pseudo load according to magnitude of a charging current provided by the charging power.

## Description

### CROSS-REFERENCE TO RELATED APPLICATION

This application claims the priority benefit of U.S. provisional application serial no. 63/763,266, filed on February 26, 2025. The entirety of the above-mentioned patent application is hereby incorporated by reference herein and made a part of this specification.

### BACKGROUND

### Technical Field

This disclosure relates to a wearable electronic device, a charging device and an operation method thereof, and particularly relates to a wearable electronic device, a charging device and an operation method thereof that may ensure execution of a complete charging operation.

### Description of Related Art

With the increase in usage time of electronic devices nowadays, it is a common practice to enhance the endurance capability of electronic devices through mobile chargers. In the current technical field, mobile chargers may be closed and stop the output operation of power supply when the supply current provided is lower than a certain current value. Under such conditions, when the battery of the electronic device is charged to a certain power capacity, the mobile charger may be closed due to the decrease in charging current demand, resulting in the battery of the electronic device being unable to be fully charged and reducing the performance of the mobile charger.

### SUMMARY

The disclosure provides a wearable electronic device, a charging device, and an operation method thereof, capable of ensuring a complete charging operation of a battery.

The charging device of the disclosure includes a power generation circuit and a pseudo load circuit. The power generation circuit receives supply power from an external device, and generates system power and charging power according to the supply power. The pseudo load circuit is coupled to an endpoint where the power generation circuit generates the system power or the charging power, and provides a pseudo load according to magnitude of a charging current provided by the charging power.

The operation method of the charging device of the disclosure includes the following. A power generation circuit is provided to receive supply power from an external device, and system power and charging power are generated according to the supply power. A pseudo load circuit is provided to couple to an endpoint where the power generation circuit generates the system power or the charging power. A pseudo load is provided according to magnitude of a charging current provided by the charging power.

The wearable electronic device of the disclosure includes the charging device according to the above, a battery, and a power management circuit. The battery receives charging power to perform charging, and the power management circuit receives system power to serve as operation power.

Based on the above, the charging device of the disclosure provides a pseudo load by activating the pseudo load circuit when the charging current decreases to a threshold current, and makes a supply current provided by the external device maintain under conditions of not being closed by means of a consumption current on the pseudo load. Thereby, the charging device may sustain the charging operation of the battery and make the battery achieve a complete charging state.

### BRIEF DESCRIPTION OF THE DRAWINGS

FIG. 1 illustrates a schematic diagram of a wearable electronic device according to an embodiment of the disclosure.
FIG. 2 illustrates a schematic diagram of a wearable electronic device according to another embodiment of the disclosure.
FIG. 3 illustrates a flowchart of an operation method of a charging device according to an embodiment of the disclosure.

### DESCRIPTION OF THE EMBODIMENTS

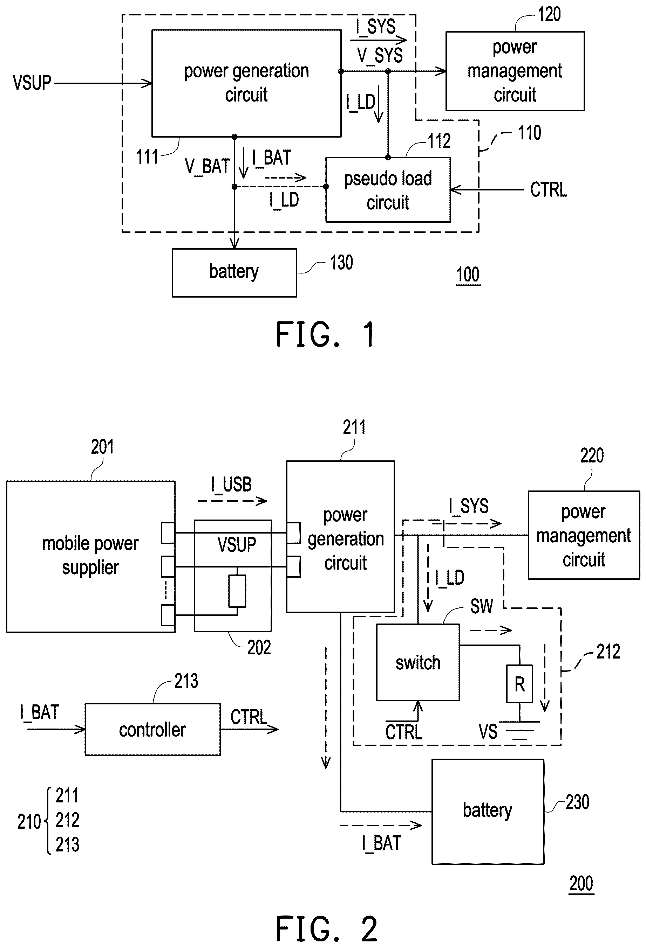

Please refer to FIG. 1. FIG. 1 illustrates a schematic diagram of a wearable electronic device according to an embodiment of the disclosure. A wearable electronic device 100 includes a charging device 110, a power management circuit 120, and a battery 130. The charging device 110 includes a power generation circuit 111 and a pseudo load circuit 112. The power generation circuit 111 may receive supply power VSUP from an external device, and generate system power V_SYS and charging power V_BAT according to the supply power VSUP. The power generation circuit 111 outputs the system power V_SYS and the charging power V_BAT through endpoints respectively. A first endpoint of the power generation circuit 111 is coupled to the power management circuit 120, and is used to transmit the system power V_SYS to the power management circuit 120. The system power V_SYS may be used as operation power of the power management circuit 120. Another second endpoint of the power generation circuit 111 is coupled to the battery 130, and is used to transmit the charging power V_BAT to the battery 130. The battery 130 may perform charging operation according to the received charging power V_BAT. The system power V_SYS may supply a system current I_SYS, and the charging power V_BAT may be used to provide a charging current I_BAT.

In this embodiment, the pseudo load circuit 112 may be coupled to an endpoint OE1 of the power generation circuit 111, or may also be coupled to an endpoint OE2 of the power generation circuit 111. The pseudo load circuit 112 may provide a pseudo load to the first endpoint or the second endpoint according to the magnitude of the charging current I_BAT provided by the charging power V_BAT.

In this embodiment, the external device used to provide the supply power VSUP may be any form of power supplier, such as a mobile power supplier. The external device is shut down when the provided output current is lower than the minimum supply current of the specification. Accordingly, the charging circuit 110 of the disclosure may activate the pseudo load circuit 112 to provide a pseudo load based on the reduced charging current I_BAT when the power capacity of the battery 130 is charged to a relatively high value, and additionally draw a load current I_LD from the first or second endpoint of the power generation circuit 111 through the provided pseudo load. By means of additionally drawing a load current I_LD, the output current provided by the external device will not be lower than the minimum supply current of the specification, and may sustain the supply operation of the supply power VSUP. In this way, the power generation circuit 111 may continuously provide the charging power V_BAT, and perform continuous charging operation on the battery 130 by means of the charging current I_BAT.

In this embodiment, regarding the activation mechanism of the pseudo load circuit 112, the pseudo load circuit 112 is activated when the charging current I_BAT provided by the charging power V_BAT is smaller than this threshold current. In order to activate the pseudo load circuit 112 early to ensure that the power supply operation of the external device is not closed, the threshold current may be set as a mobile power minimum supply current I_USB plus the system current I_SYS. The mobile power minimum supply current I_USB is determined by the developer according to the mobile power specification to be covered.

Please refer to FIG. 2. FIG. 2 illustrates a schematic diagram of a wearable electronic device according to another embodiment of the disclosure. A wearable electronic device 200 includes a charging device 210, a power management circuit 220, and a battery 230. The charging device 210 is coupled to a mobile power supply device 201 through a power cable 202. The power cable 202 may be, for example, a universal serial bus interface, and the mobile power supply device 201 may also have a universal serial bus interface.

The mobile power supply device 201 is used to provide supply power VSUB to the charging device 210, and the supply power VSUB may provide supply current I_USB to the charging device 210. The charging device 210 includes a power generation circuit 211, a pseudo load circuit 212, and a controller 213. The power generation circuit 211 generates charging power V_BAT and system power V_SYS according to the supply power VSUB, and provides the charging power V_BAT and the system power V_SYS to the battery 230 and the power management circuit 220, respectively.

In this embodiment, the pseudo load circuit 212 includes a switch SW and a load element R. The switch SW and the load element R are connected in series between the power generation circuit 211 and a reference voltage terminal VS. The pseudo load circuit 212 in this embodiment is coupled to the endpoint where the power generation circuit 211 provides the system power V_SYS, and in other embodiments of the disclosure, the pseudo load circuit 212 may also be coupled to the endpoint where the power generation circuit 211 provides the charging power V_BAT. The reference voltage terminal VS may be a reference ground terminal, or may also be an endpoint having a relatively low voltage. The voltage value on the reference voltage terminal VS may be smaller than the voltage values of the system power V_SYS and the charging power V_BAT.

The switch SW may be conducted or disconnected according to a control signal CTRL. When the switch SW is conducted, the pseudo load circuit 212 is activated, and the load element R draws a load current I_LD from the power generation circuit 211 through the provided pseudo load. In contrast, when the switch SW is turned off, the pseudo load circuit 212 is not activated.

In the embodiments of the disclosure, the switch SW may be implemented by applying any switch element well known to those having ordinary knowledge in the art, without specific limitation.

The control signal CTRL may be provided by the controller 213. In this embodiment, the controller 213 may be an internal circuit of the charging device 210. In other embodiments, the control signal CTRL may also be provided by any external controller or processor, without fixed limitation.

The controller 213 may set a threshold current according to an expected minimum supply current I_USB of a mobile power source plus a system current I_SYS, and generate the control signal CTRL through detecting a charging current I_BAT of the battery 230, and a comparison result between the charging current I_BAT and the threshold current. When the charging current I_BAT is smaller than the threshold current, the controller 213 may make the switch SW to be conducted through the control signal CTRL; when the charging current I_BAT is greater than the threshold current, the controller 213 may make the switch SW to be disconnected through the control signal CTRL.

Furthermore, the load element R in this embodiment may be a resistor, or any electronic element that may provide a load. The resistance value provided by the load element R may be set according to a calculation result of (a voltage value of the system power V_SYS)/(a minimum supply current of the supply power VSUP - the system current I_SYS of the system power V_SYS - a minimum effective charging current of the battery 230). The resistance value provided by the load element R may be smaller than or equal to the above calculation result, to ensure that a sufficiently large load current I_LD may be drawn.

Taking the voltage of the system power V_SYS as 4.4 volts, the minimum supply current of the supply power VSUP as 100 milliamperes, and the system current I_SYS as 10 milliamperes as an example, when the minimum effective charging current of the battery 230 is no greater than 20 milliamperes, the load current I_LD required to be drawn by the pseudo load circuit 212 is at least 100mA - 10mA - 20mA = 70mA (milliamperes). The resistance value provided by the load element R may be at most 4.4 / 70mA = 62.8 kiloohms.

Of course, the above data of voltage and current values are only illustrative examples. They are not used to limit the implementation scope of the disclosure. Different systems may have different requirements for current values and voltage values, and designers may make appropriate adjustments according to actual requirements.

Through the load current I_LD drawn by the pseudo load circuit 212, the supply current I_USB generated by the mobile power supply device 201 is not lower than the minimum supply current, and it may be ensured that, during the process of low current charging of the battery 230, the mobile power supply device 201 may maintain being activated, and may maintain the supply operation of the supply power VSUP.

Incidentally, in this embodiment, the power generation circuit 211 may be any form of charger, without certain limitation. The power management circuit 220 may be a power management IC (PMIC) well known to those having ordinary knowledge in the art, also without specific limitation.

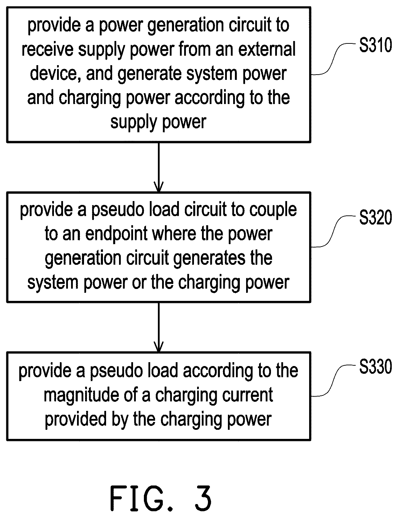

Please refer to FIG. 3 for the following description. FIG. 3 illustrates a flowchart of an operation method of a charging device according to an embodiment of the disclosure. In step S310, a power generation circuit is provided to receive supply power from an external device, and generate system power and charging power according to the supply power. In step S320, a pseudo load circuit is provided to couple to an endpoint where the power generation circuit generates the system power or the charging power. And, in step S330, a pseudo load is provided according to the magnitude of a charging current provided by the charging power.

Regarding the implementation details of the steps S310 to S330, detailed descriptions have been provided in the aforementioned multiple embodiments, and will not be elaborated in the following.

In summary, when the battery is in a charging state with low charging current, the charging device of the disclosure may make the supply current provided by the external device greater than the minimum supply current through activating the pseudo load circuit and drawing the load current by the pseudo load circuit, thereby ensuring that the external device may sustain operation without entering a shutdown state. In this way, the charging operation of the battery may be maintained, and the battery may be reliably brought into a fully charged state.

## Claims

1. A charging device, comprising:
a power generation circuit, receiving supply power from an external device, generating system power and charging power according to the supply power; and
a pseudo load circuit, coupled to an endpoint where the power generation circuit generates the system power or the charging power, providing a pseudo load according to magnitude of a charging current provided by the charging power.

2. The charging device according to claim 1, wherein the pseudo load circuit comprises:
a switch, controlled by a control signal to be conducted or disconnected; and
a load element, coupled between the switch and a reference voltage terminal, configured to provide the pseudo load.

3. The charging device according to claim 2 further comprising:
a controller, setting a threshold current according to an expected minimum supply current of a mobile power source plus a system current of the system power, wherein when the charging current provided by the charging power is less than the threshold current, the control signal is enabled to make the switch to be conducted.

4. The charging device according to claim 2, wherein a resistance value provided by the load element is set according to (a voltage value of the system power) divided by (a difference between a minimum supply current of the supply power and a system current of the system power as well as a minimum effective charging current of the battery).

5. The charging device according to claim 1, wherein the external device is a mobile power supplier.

6. An operation method of a charging device, comprising:
providing a power generation circuit to receive supply power from an external device, generating system power and charging power according to the supply power;
providing a pseudo load circuit to couple to an endpoint where the power generation circuit generates the system power or the charging power; and
providing a pseudo load according to magnitude of a charging current provided by the charging power.

7. The operation method according to claim 6 further comprising:
providing a switch and a load element to be serially coupled between the endpoint where the power generation circuit generates the system power or the charging power and a reference voltage terminal;
making the switch controlled by a control signal to be conducted or disconnected; and
wherein when the switch is conducted, the load element provides the pseudo load to the endpoint where the power generation circuit generates the system power or the charging power.

8. The operation method according to claim 7 further comprising:
setting a threshold current according to an expected minimum supply current of a mobile power source plus a system current of the system power; and
wherein when the charging current provided by the charging power is less than the threshold current, the control signal is enabled to make the switch to be conducted.

9. The operation method according to claim 8, wherein the threshold current is greater than the minimum effective charging current.

10. The operation method according to claim 7 further comprising:
setting a resistance value of the load element according to (a voltage value of the system power) divided by (a difference between a minimum supply current of the supply power and a system current of the system power as well as a minimum effective charging current of the battery).

11. A wearable electronic device, comprising:
the charging device according to claim 1; and
a battery and a power management circuit, wherein the battery receives the charging power to perform charging, the power management circuit receives the system power to serve as operation power.
